Europäisches Patentamt

European Patent Office

Office européen des brevets

(11) Veröffentlichungsnummer: **0 417 677 A1**

## (12) EUROPÄISCHE PATENTANMELDUNG

(21) Anmeldenummer: 90117339.3

(22) Anmeldetag: 08.09.90

(51) Int. Cl.5: **G01B 5/02**

(30) Priorität: 11.09.89 CH 3303/89
09.11.89 CH 4042/89

(43) Veröffentlichungstag der Anmeldung:
**20.03.91 Patentblatt 91/12**

(84) Benannte Vertragsstaaten:
**DE FR GB IT SE**

(71) Anmelder:
**INDUSTRIE-HANDELS-AKTIENGESELLSCHAFT**
**Im Bretscha 4**
**FL-9494 Schaan(LI)**

(72) Erfinder: **Walser, Carl S.**
**Salums 119**
**FL-9487 Gamprin(LI)**

(74) Vertreter: **Büchel, Kurt F., Dr.**
**Bergstrasse 297**
**FL-9495 Triesen(LI)**

(54) Vorrichtung zum Messen von Distanzen an einem Werkstück mit einer für das digitale Messen solcher Distanzen eingerichteten Schiebelehre.

(57) Die Erfindung betrifft eine Vorrichtung zum Messen von Distanzen an einem Werkstück, insbesondere mit einer für das digitale Messen eingerichteten Schiebelehre (7) mit einer langen Messschiene (1), die an Messlatten (9) angelegt werden kann. Die Messlatten (9) sind an höhenverstellbaren Säulen (41) montiert, so dass auch kubische Werkstücke an ihrer Oberseite vermessen werden können. Alternativ oder zusätzlich dazu ist das Pult (8) gegenüber den Messlatten (9) höhenverstellbar.

Fig 2

EP 0 417 677 A1

## VORRICHTUNG ZUM MESSEN VON DISTANZEN AN EINEM WWRKSTÜCK MIT EINER FÜR DAS DIGITALE MESSEN SOLCHER DISTANZEN EINGERICHTETEN SCHIEBELEHRE

Die Erfindung betrifft eine Messvorrichtung nach dem Oberbegriff des Anspruches 1. Herkömmliche Messvorrichtungen für diesen Zweck, insbesondere Schiebelehren, werden in der Regel, z.B. für das Bestimmen der Aussenmasse eines Blechzuschnittes, von Lochdurchmessern oder -abständen etc., in einem Winkel zu der Achse oder Fläche des zu messenden Werkstückes angelegt. Nun kommt es aber häufig vor, dass die am Werkstück ausgebildeten Anlegeflächen nicht durchgehend plan sind oder selbst einen Winkel mit der Achse oder Ebene des Werkstückes einschliessen, bzw. dass die Anlagepunkte nicht definiert sind, wenn es sich z.B. um die Bestimmung des Normalabstandes eines Loches von einer Kante handelt. Ausserdem möchte man oft sehr verschieden grosse Distanzen mittels einer Schiebelehre mit langer Messschiene bestimmen. Misst man nun aber mit einer solchen Schiebelehre verhältnismässig kurze Distanzen, dann ist durch das Gewicht des überstehenden Teils der Messschiene eine genaue Einstellung manuell schwierig. Für das Messen an flachen Gegenständen wurde eine erfolgreiche Schiebelehre und ein Pult entwickelt, die in der EP-A-0266713 beschrieben sind. Mit einer solchen Messeinrichtung ist es aber nicht möglich, Abstände an schachtelförmigen bzw. kubischen Werkstücken zu messen.

Die Erfindung hat sich daher die Aufgabe gestellt, eine solche Messeinrichtung derart weiterzubilden, dass auch kubisch aufgebaute Werkstücke zumindest an ihrer Oberfläche genau gemessen werden können. Diese Aufgabe wird durch die im Kennzeichen des Anspruches 1 beschriebenen Merkmale gelöst.

Vorteilhafte Weiterbildungen der Erfindung bzw. deren Ausgestaltungen sind in den Kennzeichen der Unteransprüche beschrieben.

Auf dem Pult kann ein Werkstück an die Seitenfläche der Messlatte angelegt werden, wodurch z.B. der Normalabstand eines im Werkstück senkrecht zur Pultfläche angebrachten Loches von der an die Seitenfläche der Messlatte angelegten Werkstückkante mittels einer Schiebelehre genau bestimmbar ist, die an der der genannten Seitenfläche der Messlatte gegenüberliegenden Seitenfläche so zur Anlage kommt, dass ihre Messschiene genau normal zur Seitenfläche der Messlatte ausgerichtet ist Die verschiebbarkeit der Messlatte und/oder des Pultes in vertikaler Richtung macht die Messung höhenunabhängig. Beliebige Körper können somit jeweils an ihrer Oberseite gemessen werden, obwohl die Schiebelehre an seitlichen Messlatten abgestützt ist.

Die Vorteile der erfindungsgemäss vorgeschlagenen Merkmale und deren Varianten ergeben sich aus der nachfolgenden Beschreibung, in der die Erfindung anhand der Zeichnungen beispielhaft näher erläutert wird. Es zeigen:

Fig. 1 eine erfindungsgemässe Messvorrichtung im Schrägriss, für das Messen von Blechen adaptiert;

Fig. 2 eine erfindungsgemässe Messvorrichtung im Schrägriss, für das Messen von kubischen Werkstücken adaptiert;

Fig. 3 und 4 zwei verschiedene Ausführungsformen mit einer elektrischen bzw. mit einer mechanischen Kupplung im Schrägriss;

Fig. 5 die Schrägsicht auf eine Messvorrichtung mit ausgefahrenen Säulen und aufgelegter Schiebelehre und

Fig. 6 das Schema einer Hebeschere für ein höhenverstellbares Pult.

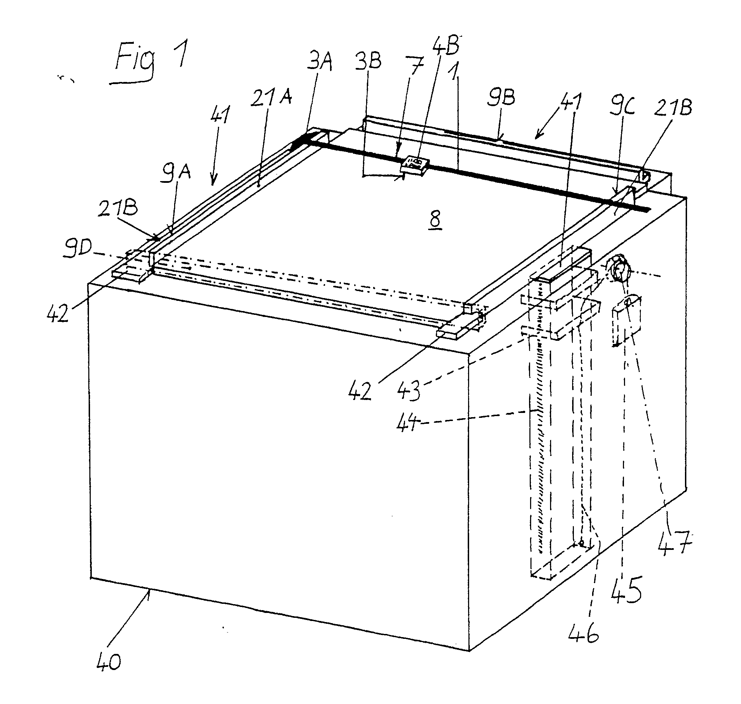

In Fig. 1 ist eine als Auflager bzw. Halterung für ein (nicht dargestelltes) Werkstück dienende, rechteckige Platte, im folgenden als Pult 8 bezeichnet, auf einem Tisch bzw. Wagen 40 befestigt. Sie kann als Richtplatte, aber auch z.B. durchscheinend und daher von unten beleuchtbar ausgebildet sein. Entlang zwei aneinander stossender Randkanten des Pultes 8 sind auf drei seiner Seiten Messlatten 9A,B,C vorgesehen. Die Messlatten 9 sind an senkrechten Säulen 41 befestigt. Die Säulen 41 sind im Wagen 40 in Führungen 43 senkrecht verschieblich gelagert. Die Seitenflächen 21A,B der Messlatten 9A,B sind genau planparallel zueinander ausgerichtet. Wenn in dieser Beschreibung der Ausdruck "genau" gebraucht wird, so ist darunter die für die jeweilige Messaufgabe erforderliche, bzw. gewünschte und erreichbare Genauigkeit, bzw. Messtoleranz zu verstehen.

Ueber den Messlatten 9 kann - z.B. wie in Spalten 3 bis 10 der als hierin geoffenbart geltenden EP-A-0266713 beschrieben - die Messschiene 1 einer Schiebelehre 7 liegen, an deren -auf Fig. 1 bezogen - linkem Ende ein Messschenkel 3A mit seinen beiden über die Messschiene hinausragenden Schenkelteilen angeordnet ist. Die beiden Schenkelteile tragen Haftmagnete, die zur Anlage an die äussere Seitenfläche 21B der Messlatten 9 bestimmt sind.

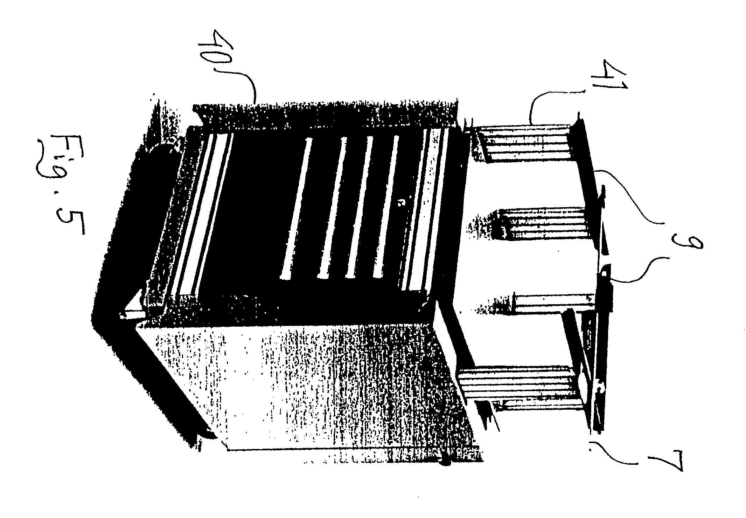

Bevorzugt ist auch der Schenkel 3A verfahrbar (Fig. 4); dies erleichtert das symmetrische Auflegen einer Schiebelehre mit grosser Messschienenlänge, da die Messschiene dann nicht einseitig überhängt, bzw. ausladet, wenn die Messung wenigstens annähernd in der Mitte der Messschiene vorgenommen werden kann. Die Schiebelehre ist, wie in der EP-A beschrieben, für das digitale Messen eingerichtet, so dass in jeder beliebigen Position des am Griffschlitten (48 befindlichen Messschenkels 3B die Messwertanzeige auf Null gestellt werden kann, bzw. Lochdurchmesser oder Abstände ermittelt werden können (vgl. Fig.13 der EP-A).

Für das Messen von Blechen etc. wird die Vorrichtung also in der in Fig.1 gezeigten Position belassen. Das Messen erfolgt wie in der EP-A beschrieben, aber hilfsweise auch mit anderen herkömmlichen Schiebelehren. Die Schiebelehre 7 bzw. deren Messschenkel 3A wird beliebig an einer der Messlatten 9A-C angelegt; ihre Messschiene 1 wird an der jeweils gegenüberliegenden Messlatte abgestützt. Im Falle der Messlatte 9B wird auf Vorsprünge 42 der Latten 9A und C eine Hilfslatte 9D gelegt, die dieselbe Funktion wie die Latten 9A bis C erfüllt, jedoch für überlange Werkstücke entfernt werden kann. Die Befestigung der Hilfslatte 9D erfolgt durch Magnete. Bei Bedarf können selbstverständlich auch eine oder zwei der anderen Messlatten 9 entfernt werden. Die Messgenauigkeit ist jedoch am grössten, wenn die Messschiene 1 beidseitig gestützt ist.

Wie in der EP-A beschrieben, befinden sich innerhalb des Messschenkels 3A Magnete, die mit der Messlatte 9A zusammenwirken, die zur Gänze aus magnetischem Material besteht. Durch diese Magnete wird einerseits eine sichere, winkelrichtige Anlage des Messschenkels 3A und damit auch der Messschiene 1 an einer der Messlatten 9 gewährleistet, gleichzeitig aber der Schenkel 3A gegen ein unbeabsichtigtes Verschieben entlang der Latte 9 abgebremst. Alternativ dazu könnte die Messschiene auch gelenkig in einer nicht dargestellten Nutenführung der Messlatten 9, ähnlich einer Reissschiene, geführt sein.

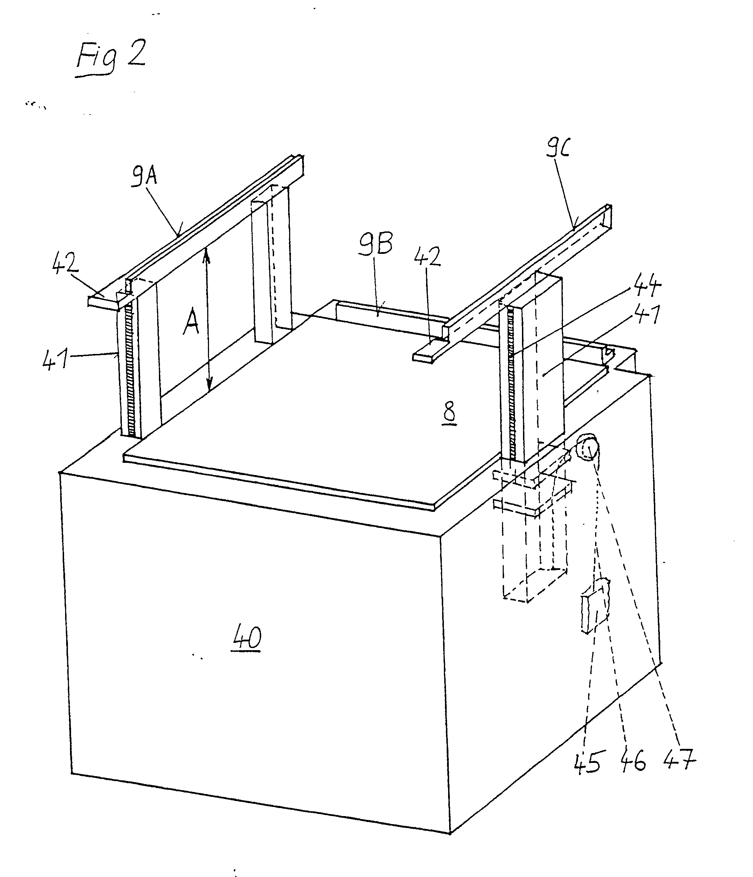

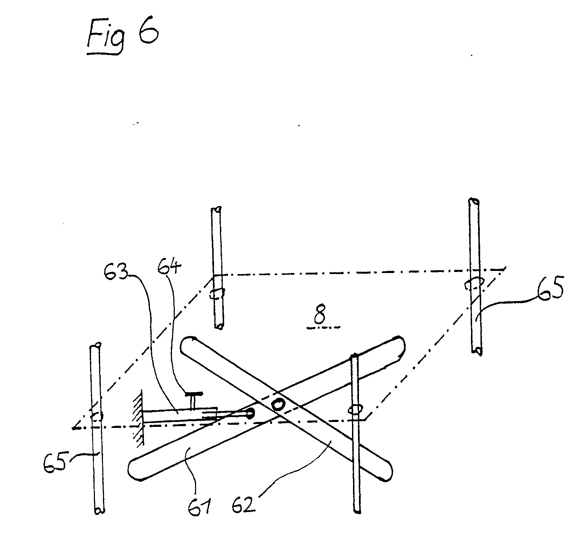

Für das Messen an Oberflächen von kubischen Werkstücken werden, wie in Fig.2 dargestellt, die Säulen 41 aus dem Wagen 40 entsprechend der Höhe des werkstückes herausgezogen. Dadurch stehen die Oberkanten der Messlatten 9 wieder als Anlagefläche für die Messschiene 1 zur Verfügung. Die Säulen 41 sind in Vertikalführungen 43 selbsthemmend geführt, so dass eine einmal eingestellte Höhenposition beibehalten bleibt. Die gewählte Höhenposition kann bei Bedarf auch an einer Messskala 44 an den Säulen 41 abgelesen werden. Die Selbsthemmung ist entsprechend den dargestellten Varianten durch ein Ausgleichsgewicht 45 bewerkstelligt, das an einem Seil 46 über eine Umlenkrolle 47 jede Säule 41 nach oben zu ziehen trachtet. Jedes Gegengewicht 45 ist etwa so schwer wie die Säule 41 und die jeweilige Messlatte 9. Andere Formen bekannter Selbsthemmung - wie z.B. eine reibungserhöhte Führung -sind ebenfalls denkbar. Alternativ oder als Ergänzung dazu kann auch das Pult 8 selbst höhenverschiebbar sein, wobei es an den Säulen 41 für die Messlatten oder an anderen bekannten Höhenführungsvorrichtungen gehalten sein kann, wie beispielhaft in Fig.6 angedeutet. Dort zeigen 61 und 62 eine Gelenkschere, die mittels Stossdämpfer 63 mit Sperrventil 64 höhenfixierbar ist. Alternativ sind natürlich auch Zahnstangen oder Schraubspindeln einsetzbar.

In den Fig.1 und 2 sind die Säulen 41 bzw. Messlatten voneinander unabhängig bewegbar dargestellt. In Fig.2 ist z.B. die Messlatte 9B nicht ausgefahren, die Latten 9A und C jedoch schon.

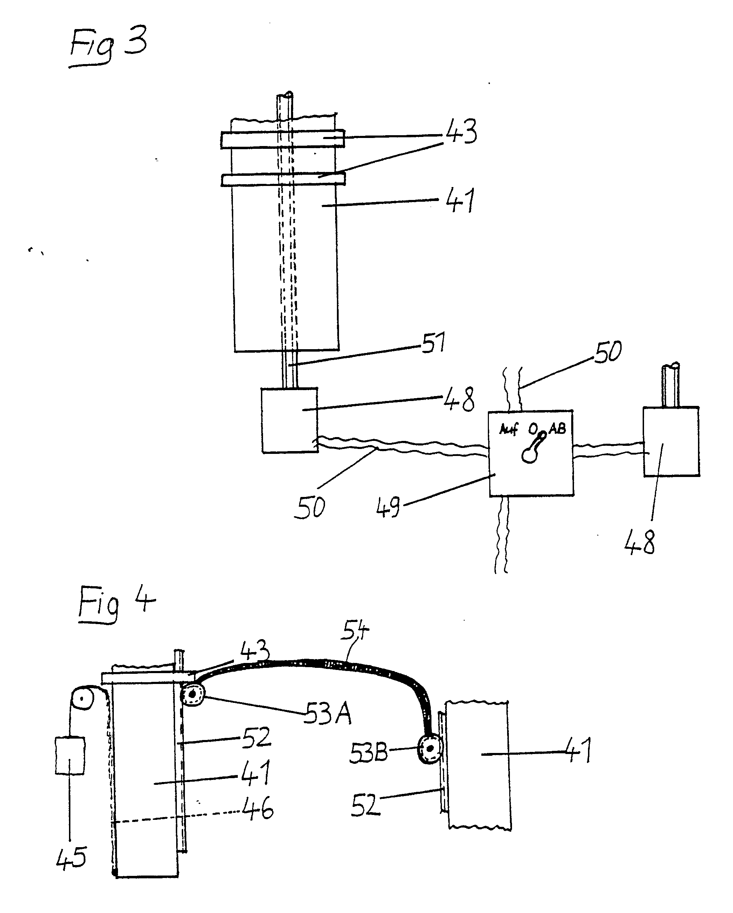

Aus Fig. 3 ist ein Detail einer Variante dargestellt, bei der die Höhenverstellung der Säulen 41 über elektrische Stellmotoren 48 erfolgt, wobei ein Schalter 49 einer Bedienperson das gleichzeitige Hoch- bzw. Tieffahren der Messlatten 9 erlaubt. Die Stellmotore sind evtl. auch über nicht gezeigte Höhenmessglieder angesteuert, so dass ihre Höhenverstellung -z.B. gemessen an ihrer Umdrehungszahl - exakt gleich ist. Die entsprechenden elektrischen Glieder sind nicht dargestellt, die Verbindungen jedoch durch Leitungen 50 symbolisch angedeutet. Die Hub- bzw. Senkbewegung der Stellmotoren 48 wird durch Spindeln 51 über Innengewinde auf die Säulen 41 übertragen. Selbstverständlich könnten die Stellmotoren auch über Zahnräder und Zahnstangen an den Säulen 41 deren Heben bzw. Senken bewirken.

In Fig.4 ist eine rein mechanische Kupplung der Säulen 41 dargestellt.Die Säulen 41 sind dabei seitlich mit einer Zahnstange 52 versehen, die mit je einem, im Wagen 40 gelagerten Zahnrad 53A zusammenwirken. Das Zahnrad 53A ist über eine flexible Welle 54 mit einem Zahnrad 53B verbunden, das die andere Säule 41 über eine Zahnstange 52 hebt oder senkt. Derart können alle Säulen 41 miteinander verbunden sein. Das Heben einer Messlatte 9 führt dann automatisch zum gleichhohen Heben der anderen Messlatte 9. Dadurch wird die Einstellung der Messlatten 9 erleichtert. Eine Bedienperson zieht oder drückt lediglich an einer Messlatte 9 und gleichzeitig erfolgt die gleichhohe Einstellung der anderen Messlatten 9. Andererseits muss bei übergrossen Werkstücken manchmal eine Messlatte 9 unten gelassen werden, wodurch ein zusätzlicher Mechanismus zum Trennen der Kupplungen gemäss Fig.3 und 4 nötig ist. Ein solcher Mechanismus kann im einen Fall ein weiterer Schalter, im anderen ein Ausrückhebel für eines der Zahnräder 53 sein, wie nicht näher gezeigt.

Spezielle Vorteile der nach den Merkmalen der Unteransprüche konstruierten Varianten ergeben sich wie folgt: Drei rahmenförmige Messlatten ermöglichen das Messen in zwei Richtungen, wobei unter Anwendung einer Hilfslatte 9D auch eine Messung in der zweiten Richtung optimal fehlerfrei erfolgen kann.

Das Befestigen von Latten 9 durch magnetische Befestigungsmittel ist praktisch und schnell.

Selbsthemmende Führungen und/oder Gegengewichte halten einmal eingestellte Positionen der Messlatten 9, so dass diese stets als plane Auflagenfläche für die Messschiene 1 dienen.Die Integration zu einer fahrbaren Messstation erleichtert das Benutzen der Vorrichtung in einem Betrieb, wobei Laden sämtlicher Bestandteile der Messvorrichtung aufnehmen können und somit eine rasche Adaption vorort vorgenommen werden kann.

## Ansprüche

1. Vorrichtung zum Messen von Distanzen an einem Werkstück, mit einem pult (8) für das Auflegen des Werkstückes sowie mit seitlichen Messlatten (9) für das Auflegen einer Schiebelehre (7), dadurch gekennzeichnet, dass der Abstand (A) zwischen den Messlatten (9) und dem Pult (8) veränderbar ist.

2. Vorrichtung nach Anspruch 1, dadurch gekennzeichnet, dass die Messlatten (9) an höhenverschiebbaren, in selbsthemmenden Führungen (43) geführten Säulen (41) befestigt sind, die seitlich des Pultes (8) in einem Rahmen gehalten sind.

3. Vorrichtung nach Anspruch 1 oder 2, dadurch gekennzeichnet, dass drei zueinander rahmenförmig angeordnete Messlatten (9A,B,C) vorgesehen sind.

4. Vorrichtung nach einem der vorhergehenden Ansprüche, dadurch gekennzeichnet, dass zwei zueinander parallele Messlatten (9A,C) Vorsprünge (42) für das rechtwinkelige Aufsetzen einer Hilfslatte (9D) aufweisen, die vorzugsweise magnetische Befestigungsmittel für das Befestigen an den Vorsprüngen (42) aufweist.

5. Vorrichtung nach einem der Ansprüche 1, 3 oder 4, dadurch gekennzeichnet, dass das Pult (8) höhenverschiebbar an Säulen (41;65) für die Messlatten (9), vorzugsweise mittels selbsthemmender Führungen, gehalten ist.

6. Vorrichtung nach einem der vorhergehenden Ansprüche, dadurch gekennzeichnet, dass die Säulen über je mindestens ein Seil (46) und mindestens je eine Rolle (47) durch ein Gegengewicht (45) gegen die Schwerkraft beaufschlagbar sind.

7. Vorrichtung nach einem der vorhergehenden Ansprüche, dadurch gekennzeichnet, dass die Säulen (41;65) untereinander durch Höhenstellglieder (48,54) - vorzugsweise durch Stellmotoren (48) oder durch Getriebe mit flexiblen Wellen (54) - verbunden sind.

8. Vorrichtung nach Anspruch 7, dadurch gekennzeichnet, dass die ,Verbindungen einzeln aus- bzw. einkuppelbar sind.

9. Vorrichtung nach einem der vorhergehenden Ansprüche, dadurch gekennzeichnet, dass das Pult (8) und der Rahmen mit einem Wagen (40) zu einer fahrbaren Messstation integriert sind.

10. Vorrichtung nach Anspruch 9, dadurch gekennzeichnet, dass der Wagen (40) Laden und/oder Beleuchtungseinrichtungen enthält.

Fig 1

Fig 2

Fig 3

Fig 4

Fig. 5

Fig 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 266 713 (INDUSTRIE-HANDELS AG) * Spalte 2, Zeilen 21-41 * --- | 1,4,9, 10 | G 01 B 5/02 |
| A | EP-A-0 289 983 (MAUSER WERKE) * Spalte 5, Zeilen 9-32; Spalte 6, Zeilen 52-58; Spalte 7, Zeilen 31-33; Fig. * --- | 1,10 | |
| A | GB-A-2 052 756 (CLARKS LTD) * Das ganze Dokument * --- | 1,5-7 | |
| A | GB-A-1 217 251 (DATA RESOLVED TOOLS) * Seite 2, Zeilen 40-61; Fig. * --- | 1,5,6 | |
| A | FR-A-1 185 601 (LAFOSSE) * Das ganze Dokument * --- | 1 | |
| A | PATENT ABSTRACTS OF JAPAN, Band 6, Nr. 162 (P-137)[1040], 25. August 1982; & JP-A-57 80 502 (KOBE SEIKOSHO) 20-05-1982 * Zusammenfassung * --- | 1 | RECHERCHIERTE SACHGEBIETE (Int. Cl.5) |
| A | PATENT ABSTRACTS OF JAPAN, Band 7, Nr. 32 (P-174)[1177], 8. Februar 1983; & JP-A-57 184 903 (KIYOSHI HIGUCHI) 13-11-1982 * Zusammenfassung * --- | 1 | G 01 B 5 G 01 B 3 G 01 B 7 |
| A | PATENT ABSTRACTS OF JAPAN, Band 10, Nr. 358 (P-522)[2415], 2. Dezember 1986; & JP-A-61 155 808 (YAMATAKE HONEYWELL) 15-07-1986 * Zusammenfassung * ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 18-10-1990 | RAMBOER P. |